(19) Europäisches Patentamt
European Patent Office
Office européen des brevets

(11) **EP 1 891 170 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: **06763571.4**

(22) Anmeldetag: **07.06.2006**

(51) Int Cl.:
*C09D 5/29* (2006.01)          *B05D 5/06* (2006.01)
*C08J 7/04* (2006.01)

(86) Internationale Anmeldenummer:
**PCT/EP2006/062987**

(87) Internationale Veröffentlichungsnummer:
**WO 2006/131540 (14.12.2006 Gazette 2006/50)**

(54) **SCHMUTZVERBERGENDE BESCHICHTUNG**

DIRT-CONCEALING COATING

REVETEMENT DISSIMULANT LES SALISSURES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.06.2005 DE 102005026359**

(43) Veröffentlichungstag der Anmeldung:
**27.02.2008 Patentblatt 2008/09**

(73) Patentinhaber: **Fraunhofer-Gesellschaft zur Förderung der angewandten Forschung e.V.
80686 München (DE)**

(72) Erfinder:
• **VISSING, Klaus-Dieter
  27321 Morsum (DE)**
• **NEESE, Gabriele
  28215 Bremen (DE)**
• **OTT, Matthias
  21255 Dohren (DE)**
• **DÖLLE, Christopher
  27749 Delmenhorst (DE)**

(74) Vertreter: **Eisenführ, Speiser & Partner
Postfach 10 60 78
28060 Bremen (DE)**

(56) Entgegenhaltungen:
**EP-A- 0 913 447    EP-A- 1 078 975
EP-A- 1 494 049**

• **DATABASE WPI Section Ch, Week 200465 Derwent Publications Ltd., London, GB; Class A60, AN 1999-438461 XP002394819 & JP 03 572916 B2 (TOPPAN PRINTING CO LTD) 6. Oktober 2004 (2004-10-06)**

**Beschreibung**

Die vorliegende Erfindung betrifft ein Verfahren zum Herstellen einer die Schmutzwahrnehmung insbesondere von Fingerabdrücken unterdrückenden Oberfläche sowie Körper mit einer entsprechenden, die Schmutzwahrnehmung unterdrückenden Oberfläche umfassend eine Beschichtung mit Abschnitten mit einem durch Schichtdickenunterschied bestimmten Interferenz-Farbenmuster, wobei die Abschnitte laterale Ausdehnungen von 1 bis 100 μm aufweisen und vorzugsweise eine Dicke von nicht mehr als 300 nm aufweisen.

In einer Vielzahl von technischen Anwendungsgebieten werden glänzende Oberflächen insbesondere wegen ihres ästhetischen Effekts eingesetzt. Beispiele solcher Einsatzgebiete sind Haushalts- und Sanitärgegenstände wie Blenden, Griffe, Abflussstopfen, Gehäuse, beispielsweise für Armaturen und Mischerbaiterien, Möbelbeschläge und Zierleisten. Vergleichbare Gegenstände werden auch im Automobilbereich, insbesondere in Karosserien, für Tür- und Kofferraumgriffe, für Blenden und Zierleisten sowie in der Architektur oder im Klinikbereich eingesetzt, insbesondere als Gehäuse für medizinische Vorrichtungen. Wegen seiner hohen Korrosionsbeständigkeit wird als Grundmaterial der Oberfläche gem Edelstahl, Chrom oder eine andere Stahllegierung verwendet, aber auch andere Metalle und Legierungen sowie metallbeschichtete Materialien werden häufig eingesetzt.

Um einen sauberen Eindruck zu vermitteln, müssen die unvermeidlichen Verschmutzungen, insbesondere Fingerabdruckspuren, Staub, Wasser-, Kalk- und Reinigungsmittelflecken entweder stets entfernt (gereinigt) werden oder dürfen nicht für das Auge erkennbar sein. Dies gilt insbesondere für Haushaltsgegenstände, die aufgrund ihres häufigen Gebrauchs sehr intensiv dem Kontakt mit Fingerabdrücken ausgesetzt sind, sowie glänzenden, dekorativen Oberflächen. Die Reinigung dieser Oberflächen ist sehr kostenintensiv und führt zudem häufig mit der Zeit zu einer Verschlechterung des Oberflächenerscheinungsbildes.

Im Stand der Technik ist deshalb versucht worden, glänzende Oberflächen durch Schutzlacke wie Acryllacke, Epoxylacke, Polyurethanlacke oder Polysiloxanlacke gegenüber Verschmutzungen und vor chemischen Veränderungen zu schützen, wie sie beispielsweise direkt durch Fingerabdrücke und als Korrosion bei Verunreinigung durch Fingerabdrücke auftreten. Die Lacke sollen dabei eine leichte Reinigung der Oberfläche ermöglichen und häufig auch verhindern, dass Schmutzpartikel an der Oberfläche anhaften können. Beispielsweise zeigt die DE 101 58 838 A1 eine wachshaltige Zubereitung zur wiederholten manuellen Beschichtung von Metalloberflächen, um die Empfindlichkeit der Metalloberflächen gegenüber Fingerabdrücken zu reduzieren. Weitere, das Anhaften von Fingerabdruckspuren reduzierende Zubereitungen und Beschichtungen sind beschrieben in der DE 100 57 464 A1, DE 101 44 531 A1 und DE 101 59 288 A1. Den Zubereitungen und damit hergestellten Beschichtungen ist gemeinsam, dass sie das Anhaften von Fingerabdruckspuren, Fettanhaftungen und Schmutzpartikeln verringern sollen, so dass die entsprechend beschichteten Oberflächen beispielsweise durch Wischen leicht gereinigt werden können.

Ferner ist es bekannt, Oberflächen mit flüssigen Silikonölen, Parafinen oder Fluorpolymeren, die als Trenn- und Antihaftmittel eingesetzt werden, zu beschichten. Diese Beschichtungen sind jedoch häufig besonders gegen Staubanhaftungen anfällig und werden bei Berührungen leicht abgenutzt und auf die Haut übertragen.

Aus der US 5,599,489 und der JP 07328532 wiederum ist es bekannt, Oberflächen mit Beschichtungen zum Hervorrufen eines Lotus-Effekts zu versehen. Dabei wird die Oberfläche strukturiert, damit durch eine niedrige Oberflächenenergie das Anhaften von Flüssigkeiten und Verschmutzungen erschwert werden soll.

EP 1078975 A1 offenbart ein cholesterisches Schichtmaterial, umfassend wenigstens eine dreidimensional vernetzte, orientierte cholesterische Schicht, dadurch gekennzeichnet, dass die vernetzte(n) cholesterische(n) Schicht(en) im Wesentlichen über die gesamte Schichtdicke ein homogenes Interferenzlinienmuster aufweist (aufweisen).

JP 03 572916 offenbart ein laminiertes Material umfassend ein basismaterial, eine metallische Schicht und eine transparente Harzschicht, in welcher ein Pigment unregelmäßig verteilt ist.

EP 0 913 447 A1 offenbart Zusammensetzung zur Bildung zum Hydrophilieren der Oberfläche eines Körpers.

Ein bei herkömmlichen Beschichtungen besonders nachteiliger Effekt ist, dass durch das Versehen einer glänzenden Oberfläche mit einer herkömmlichen Beschichtung häufig die Haptik und vor allem die optischen Eigenschaften der Oberfläche merkbar verändert werden. Beispielsweise wirken Oberflächen mit einer Lotus-Effekt-Beschichtung rau und matt. Dieser Nachteil tritt auch bei wachsartigen Beschichtungen auf. Oberflächen, die mit Schutzlacken versehen sind, verlieren, auch wenn es sich um hochtransparente Systeme handelt, ihr ursprüngliches Aussehen. Dieses trifft insbesondere für matte Oberflächen zu. Einige herkömmliche Beschichtungen, insbesondere solche, die in herkömmlichen Sol-Gel-Prozessen aufgetragen werden, sind zudem nur geeignet für Oberflächen, die sehr hohen Temperaturen ausgesetzt werden können, und sind daher nur für wenige Materialen einsetzbar. Zudem wird bei Durchführen herkömmlicher Oberflächenbehandlungen (insbesondere bei hohen Temperaturen) häufig die Farbe der behandelten Oberfläche merklich verändert.

Ferner ist nachteilig, dass die Wirkung herkömmlicher Beschichtungsverfahren zum Schutz vor oberflächlichen Verschmutzungen nicht objektiv beurteilt wird, sondern subjektiv erfolgt. Während einerseits zwar beispielsweise die mittlere Dicke einer Beschichtung oder ihre Abriebfestigkeit mit herkömmlichen Verfahren bestimmbar ist, gibt es zur Bewertung der Sichtbarkeit einer auf der Oberfläche befindlichen Verschmutzung oder eines Fingerabdrucks keine Standardverfahren.

Aufgabe der vorliegenden Erfindung war es, ein Verfahren zum Behandeln von Oberflächen anzugeben, mit dem die oben beschriebenen Nachteile verringert oder gänzlich aufgehoben werden können. Insbesondere sollte ein Verfahren zur Oberflächenbehandlung und eine entsprechend behandelte Oberfläche angegeben werden, die gegen eine Verschmutzung insbesondere durch Fingerabdrücke oder andere dünnfilmige Verschmutzungen unempfindlich ist. Vor allem der natürliche Eindruck der Bauteiloberfläche wie auch der Farbeindruck sollen möglichst unverfälscht erhalten bleiben. Die Wirkung der Behandlung soll gegenüber mechanischen Belastungen, gegen Abrieb und gegenüber Chemikalien langzeitstabil sein, um auch bei Einsatz von Reinigungsmitteln einen lang anhaltenden Schutz bieten zu können. Ferner sollte das Verfahren ermöglichen, beliebig dreidimensional geformte Oberflächen sowie beliebige Materialien zu behandeln, insbesondere Metalle, Glas, Kunststoffe oder metallisch beschichtete Kunststoffe.

Ferner sollte ein Verfahren angegeben werden, mit denen die Auffälligkeit einer Verschmutzung einer Oberfläche, insbesondere durch einen Fingerabdruck, objektiv bewertet werden kann.

Erfindungsgemäß wird deshalb ein Verfahren angegeben zum Herstellen einer die Schmutzwahrnehmung unterdrückenden glänzenden Oberfläche, umfassend die Schritte:

a) Bereitstellen einer glänzenden Oberfläche,

b) Versehen der Oberfläche mit einer aushärtbaren Schicht, insbesondere vernetzbaren Precursorschicht, mit einer mittleren Dicke von 10 bis 300 nm nach Verdampfen eines gegebenenfalls eingesetzten Lösungs- oder Verdünnungsmittels,

c) Aushärten, insbesondere Vernetzen, der aushärtbaren Schicht,
wobei die Oberfläche spätestens nach Durchführen von Schritt c) im sichtbaren Licht Abschnitte mit einem Interferenz-Farbenmuster aufweist, und wobei die Abschnitte laterale Ausdehnungen von 1 bis 100 $\mu$m aufweisen.

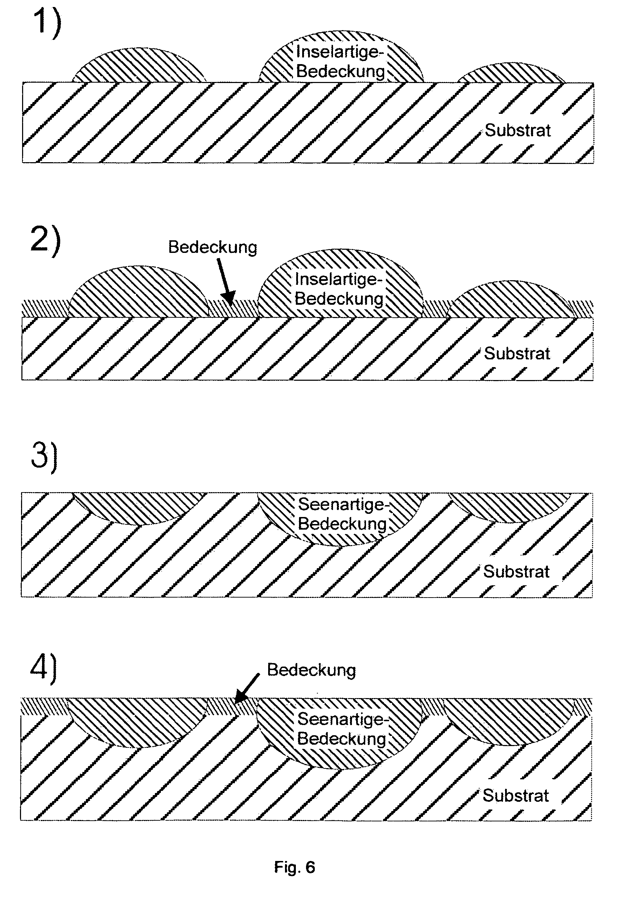

Die mittlere Dicke der aushärtbaren Schicht wird bestimmt bezogen auf eine Fläche von 10 mm$^2$ der beschichteten Oberfläche. Während die Beschichtung die Oberfläche teilweise oder vollständig bedecken kann, bilden die Abschnitte mit Interferenz-Farbenmuster im sichtbaren Spektralbereich keine geschlossene Bedeckung, sondern abgrenzbare Bereiche mit lateralen Ausdehnungen von 1 bis 100 $\mu$m. Die Interferenzfarben entstehen durch optische Interferenz des einfallenden Lichtes an zumindest teilweise transparenten dünnen Schichten. Hierbei bestimmen der Brechungsindex und vor allem die vorliegende Schichtdicke die im sichtbaren Spektralbereich optisch wahrgenommene Interferenzfarbe. Die abgegrenzten Bereiche mit optisch erkennbaren Interferenzfarbmuster grenzen sich daher gegenüber ihrer Umgebung in der Regel durch einen Schichtdickenunterschied ab. Dieser Schichtdickenunterschied lässt sich vereinfacht durch vier Schichtdickenverteilungen erzeugen bzw. unterscheiden (siehe Figur 6):

1. Teilweise Beschichtung der Oberfläche mit inselartigen, lateral begrenzten Bedeckungen, deren Schichtdicken zu Interferenzfarben im sichtbaren Spektralbereich führen.

2. Vollständige Beschichtung der Oberfläche mit zusätzlichen inselartigen, lateral begrenzten Bereichen, deren Schichtdicken über denen der Umgebung liegen.

3. Teilweise Beschichtung der Oberfläche mit seenartigen, lateral begrenzten Bedeckungen, deren Schichtdicken zu Interferenzfarben im sichtbaren Spektralbereich führen.

4. Vollständige Beschichtung der Oberfläche mit zusätzlichen seenartigen, lateral begrenzten Bereichen, deren Schichtdicken über denen der Umgebung liegen.

Erfindungsgemäß können diese Möglichkeiten zum Herstellen von insel- oder seeartigen, lateral begrenzten Bedeckungen auch miteinander kombiniert werden. Bevorzugt ist, dass die Schichtdicken der Abschnitte mit Interferenzfarbmuster im sichtbaren Spektralbereich im Bereich der insel- oder seeartigen Bedeckungen 50 bis 500 nm, besonders bevorzugt 150 bis 250 nm beträgt. Bevorzugt ist ferner, dass der Flächenanteil der Abschnitte mit Interferenzfarbmuster im sichtbaren Spektralbereich 10 bis 60 Prozent der in Schritt b) behandelten Oberfläche beträgt, besonders bevorzugt ist ein Anteil von 15 bis 30 Prozent. Auf diese Weise lassen sich übliche Verschmutzungen, insbesondere von Fingerabdrücken, besonders gut verbergen.

Die jeweils hervorgerufene Interferenzfarbe kann insbesondere anhand der Wahl der in Schritt c) hergestellten Schichtdicke gesteuert werden. Dabei ist es auf silber-farbigen Oberflächen besonders bevorzugt, Abschnitte mit bauer Interferenzfarbe, auf gold-farbigen Oberflächen besonders bevorzugt gelbe Interferenzfarben und auf kupfer-farbigen Oberflächen besonders bevorzugt gelb-rote Interferenzfarben herzustellen. Abschnitte mit den genannten optisch wahrnehmbaren Farbeindruck sind besonders gut geeignet zum Verbergen von Fingerabdruck-Verschmutzungen auf den jeweilig gefärbten Oberflächen.

Precursor im Sinne der Erfindung ist jede vernetzbare Substanz. Bevorzugte Precursoren enthalten Atome ausgewählt aus der Gruppe bestehend aus Kohlenstoff-, Silicium- und Sauerstoffatomen. Vorzugsweise beträgt die Anzahl der Kohlenstoff-, Silicium- und Sauerstoffatome zumindest 50 % der Gesamt-Atomanzahl ohne Wasserstoff des Precursors. Das Vernetzen der Precursorschicht in Schritt c) erfolgt dann in Abhängigkeit vom gewählten Precursor. Besonders bevorzugte Precursoren sind solche, die durch die Einwirkung eines Plasmas vernetzen und dadurch zumindest oberflächlich aushärten. Derart hergestellte Beschichtungen sind besonders widerstandsfähig gegen Abrieb und entsprechend bei üblichen Belastungen, insbesondere an häufig angefassten Oberflächen, sehr haltbar. Besonders geeignete Precursoren sind Silikonöle und Kohlenwasserstoffe wie Polyether.

Die Erfindung geht dabei von der Erkenntnis aus, dass Fingerabdrücke und vergleichbare Verschmutzungen, wie sie insbesondere beim täglichen Gebrauch auf Haushaltsgegenständen auftreten, hauptsächlich aufgrund ihres optischen Kontrasts zur übrigen Oberfläche auffällig und störend wirken. Es hat sich nun überraschend herausgestellt, dass dieser Kontrast auch bei glänzenden Oberflächen, insbesondere metallisch glänzenden Oberflächen, verringert werden kann, ohne das Erscheinungsbild der Oberfläche und insbesondere ihren Glanz wesentlich zu beeinträchtigen. Das erfindungsgemäße Verfahren bezweckt dementsprechend, eine behandelte Oberfläche mit einem unauffälligen, vorzugsweise unregelmäßigen Muster zu versehen, mit dessen Hilfe sich der optische Kontrast von Verunreinigungen, wie beispielsweise Fingerabdrücken, reduzieren lässt und diese sich somit optisch kaum abheben.

Das erfindungsgemäße Verfahren verändert die entsprechend behandelte Oberfläche durch Aufbringen einer ausgehärteten Beschichtung. Bei besonders gut reflektierenden, glänzenden Oberflächen ist es deshalb manchmal möglich, eine Änderung der Oberflächen-Reflexionseigenschaften mit dem bloßen Auge wahrzunehmen, auch wenn diese Veränderung durch die erfindungsgemäß aufgebrachte Beschichtung nicht in jedem Fall als störend wahrgenommen werden muss. Besonders gut die Schmutzwahrnehmung unterdrückende Oberflächenbeschichtungen, die gleichzeitig sehr unauffällig sind, werden erfindungsgemäß erhalten, indem in Schritt a) eine glänzende Oberfläche eingesetzt wird, die einen mittleren Anteil diffuser Lichtstreuung an dem gesamten von der Oberfläche reflektierten Licht von zumindest 30 % aufweist. Bei einen mittleren Anteil diffuser Lichtstreuung an dem gesamten von der Oberfläche reflektierten Licht von mehr als 60 % wiederum fallen Verschmutzungen und insbesondere Fingerabdrücke bereits ohne eine erfindungsgemäß aufgebrachte Beschichtung kaum auf. Dementsprechend ist es ferner bevorzugt, in Schritt a) eine glänzende Oberfläche einzusetzen, die einen mittleren Anteil diffuser Lichtstreuung an dem gesamten von der Oberfläche reflektierten Licht von 30 % bis 60 % aufweist. Derartige Oberflächen werden allgemein als glänzend beschrieben, insbesondere als metallisch glänzend; im Rahmen dieser Erfindung bezeichnet der Ausdruck "glänzend" dementsprechend insbesondere Oberflächen, die einen mittleren Anteil diffuser Lichtstreuung an dem gesamten von der Oberfläche reflektierten Licht von 30 % bis 60 % aufweisen.

Insbesondere bei Metalloberflächen wie beispielsweise der Oberfläche von Metallstücken, aber auch bei Oberflächen metallbeschichteter Kunststoffe, kann ein solcher bevorzugter Anteil diffuser Lichtstreuung insbesondere durch eine geeignet eingestellte Oberflächenrauhigkeit erzielt werden. Bevorzugt weist die in Schritt a) behandelte Oberfläche eine mittlere Rauhigkeit $R_a$ von 0,3 bis 1,2 $\mu$m und/oder eine Rauhtiefe $R_z$ von 3,0 bis 15 $\mu$m auf. Derartige Oberflächen erscheinen für das unbewaffnete Auge glatt und matt bis stark glänzend. Ein metallischer Charakter ist bei entsprechenden metallischen oder metallbeschichteten Körpern gut zu erkennen.

Es hat sich nunmehr herausgestellt, dass übliche (Fett-) Schmutzpartikel, wie sie insbesondere bei Fingerabdrücken auftreten, aber auch feine allfällig im Hausstaub vorhandene Hautschuppen, in der Regel einen Durchmesser von weniger als 100 $\mu$m besitzen und flach sind. Bei Oberflächenstrukturen mit lateralen Ausdehnungen von 1 bis 100 $\mu$m verschwindet auf vorteilhaft einfache Weise der Randkontrast eines Großteils der in üblichen Verschmutzungen auftretenden Partikeln innerhalb der Strukturen der Oberfläche. Daher besitzt die in a) bereitgestellte Oberfläche bevorzugt eine Oberflächentopografie mit Strukturen, die laterale Ausdehnungen im Bereich von 1 bis 100 $\mu$m aufweist.

Besonders bevorzugt werden in Schritt a) insbesondere solche Oberflächen bereitgestellt, die einen mittleren Anteil diffuser Lichtstreuung an dem gesamten von der Oberfläche reflektierten Licht von 35 bis 55% aufweisen. Mit solchen Oberflächen kann die Wahrnehmung üblicher Schmutzpartikel und insbesondere von in Fingerabdrücken auftretenden Schmutzpartikeln besonders gut verringert werden. Besonders bevorzugt werden in Schritt a) insbesondere Oberflächen bereitgestellt, die eine mittlere Rauheit $R_a$ von 0,5 bis 1,0 $\mu$m und eine Rauhtiefe $R_z$ von 5,0 bis 10 $\mu$m aufweisen.

Die Erfindung geht jedoch über das bloße Verringern des Randkontrastes üblicher Schmutzpartikel hinaus, indem erfindungsgemäß die bereitgestellte Oberfläche mit einer vernetzbaren, vorzugsweise auch nach Abdampfen eines gegebenenfalls verwendeten Lösungs- oder Verdünnungsmittels flüssigen Precursorschicht mit einer mittleren Dicke von 10 bis 300 nm vorzugsweise 10 bis 100 nm und besonders bevorzugt 10 bis 50 nm, nach Verdampfen eines ggf. eingesetzten Lösungsmittels versehen und die Precursorschicht zu einer polymeren Beschichtung vergleichbarer Schichtdicken vernetzt wird. Überraschenderweise hat sich herausgestellt, dass die erfindungsgemäß ausgewählte Oberflächenrauhigkeit und Topografie auf vorteilhafte Weise die Dicke und die Verteilung der Precursorschicht beeinflussen und letztendlich die dünne Beschichtung ein für das unbewaffnete Auge nicht auflösbares Interferenzfarbenspiel erzeugt, von dem übliche dünnschichtige Verschmutzungen, insbesondere die in Fingerabdrücken auftretenden Fettschmutzbedeckungen, nur schwer unterschieden werden können.

Wird eine Fingerabdruck-Verschmutzung auf eine Oberfläche aufgebracht, so wird entlang der Papillarlinien Partikel wie Hautschuppen, Fettschmutzbedeckungen und sonstige Schmutzpartikel auf der Oberfläche hinterlassenen. Von diesen Partikeln wird Licht auf eine Weise reflektiert, absorbiert, gebeugt und gebrochen, dass sich optisch ein deutlicher Kontrast zwischen der Papillarlinie und der unverschmutzten Oberfläche herausbildet, wobei in der Regel die Papillarlinien vom unbewaffneten Auge als dunkler empfunden werden. Durch das erfindungsgemäße Verfahren und durch entsprechend behandelte Oberflächen wird dieser ansonsten nur schwer beherrschbare Effekt häufig auftretender Verschmutzungen (insbesondere durch Fingerabdrücke) auf vorteilhaft einfache Weise minimiert, so dass insbesondere Fingerabdrücke nur schwer oder gar nicht von ihrer Umgebung unterschieden werden können. Dieser Effekt tritt insbesondere bei Oberflächen auf, die einen mittleren Anteil diffuser Lichtstreuung an dem gesamten von der Oberfläche reflektierten Licht von bis zu 60 % aufweisen. Das Versehen derartiger fingerschmutzempfindlicher Oberflächen mit einer erfindungsgemäßen Beschichtung ist dementsprechend erfindungsgemäß besonders bevorzugt.

Im Ergebnis wird mit dem erfindungsgemäßen Verfahren eine Oberfläche mit "Antifingerprint"-Eigenschaft bereitgestellt, wobei die "Antifingerprint"-Eigenschaft nicht durch die Abwesenheit von Verschmutzungen hervorgerufen wird - wie in den Verfahren und Oberflächen gemäß dem Stand der Technik angestrebt -, sondern dadurch, dass die auf der Oberfläche vorhandenen Schmutzpartikel (beispielsweise Hautschuppen, aber insbesondere auch Fettschmutz, wie er durch Fingerabdrücke hinterlassen wird) mit dem unbewaffneten Auge nicht oder nur schwach wahrgenommen werden. Bei einer erfindungsgemäß behandelten Oberfläche führt somit eine Verschmutzung zu einer vernachlässigbaren Beeinträchtigung des wahrgenommenen Gesamtcharakters der Oberfläche, obwohl die Verschmutzung physikalisch vorhanden ist. Die erfindungsgemäß behandelten Oberflächen erfordern deshalb trotz gewahrten Glanzes eine seltenere Reinigung als herkömmliche glänzende Oberflächen. Ferner ist ein Vorteil des erfindungsgemäßen Verfahrens, dass es auf eine Vielzahl verschiedener Oberflächen, insbesondere gekrümmte Oberflächen und Oberflächen aus Metall, Glas und/oder Kunststoff, angewendet werden kann und insbesondere ohne Einsatz hoher Temperaturen, beispielsweise höher als 100°C, durchgeführt werden kann. Zudem kann die Oberfläche auch nach Durchführen des erfindungsgemäßen Verfahrens weiter bearbeitet und insbesondere gebogen oder anderweitig umgeformt werden, beispielsweise gekantet, ohne dass die "Antifingerprint"-Eigenschaft verloren ginge.

Wird die erfindungsgemäße behandelte Oberfläche nach Durchführen des erfindungsgemäßen Verfahrens weiterbehandelt, beispielsweise indem die Oberfläche weiter beschichtet wird, so ist darauf zu achten, dass die durch die erfindungsgemäß erzeugte Beschichtung vermittelten Effekte nicht beseitigt werden.

In Schritt b) wird die bereitgestellte Oberfläche mit einer Flüssigkeit versehen, die einen oder mehrere vernetzbare, vorzugsweise flüssige Precursoren enthält. Der Precursor weist vorzugsweise einen niedrigen Dampfdruck auf, so dass er die in Schritt a) bereitgestellte Oberfläche bis zum Durchführen von Schritt c) stabil bedeckt. Der Fachmann wählt einen solchen Precursor aus anhand der geplanten Zeit, die zwischen dem Durchführen der Schritte b) und c) verstreichen soll, und anhand der Prozesstemperatur und des Prozessdrucks. Vorzugsweise besitzt der Precursor einen Dampfdruck von nicht mehr als 1 mbar bei 25 °C; besonders bevorzugt beträgt der Dampfdruck nicht mehr als 0,1 mbar bei 25 °C. Vernetzbare Precursoren mit derartig bevorzugten Dampfdrücken sind insbesondere geeignet zur Vernetzung in einem Niederdruck-Plasmaverfahren ohne Kühlung. Soweit in dieser Beschreibung nicht anders angegeben, werden Dampfdrücke bei 25 °C gegen Atmosphärendruck bestimmt.

Der Precursor ist vorzugsweise in einem Lösungs- oder Verdünnungsmittel aufgenommen. Das Lösungs- oder Verdünnungsmittel ist so ausgewählt, dass es das Auftragen eines gleichmäßigen dünnen Films auf der Oberfläche ermöglicht, aber vorzugsweise vor dem Vernetzen des Precursors in Schritt c) leicht entfernbar ist, vorzugsweise durch Verdampfen.

Die in Schritt a) bereitgestellte Oberfläche wird mit dem Precursor oder dem precursorhaltigen Lösungs- oder Verdünnungsmittel vorzugsweise gleichmäßig beschichtet. Dies gelingt am besten, wenn der Precursor oder das precursorhaltige Lösungs- oder Verdünnungsmittel auf der bereitgestellten Oberfläche spreitet.

Zum Unterstützen des Spreitens ist es insbesondere bevorzugt, wenn die in Schritt a) bereitgestellte Oberfläche eine Oberflächenenergie besitzt, die deutlich höher ist als die Oberflächenenergie bzw. Oberflächenspannung des Precursors bzw. des precursorhaltigen Lösungs- oder Verdünnungsmittels. Bevorzugt besitzt daher die in Schritt a) bereitgestellte Oberfläche eine Oberflächenenergie von zumindest 50 mN/m und ist die Verwendung eines Lösungs- oder Verdünnungsmittels mit einer Oberflächenspannung von <30 mN/m; besonders bevorzugte Lösungs- oder Verdünnungsmittel sind kurzkettige Siloxane wie beispielsweise Hexamethyldisiloxan und organische Lösungsmittel wie niedermolekulare Kohlenwasserstoffe wie beispielsweise Hexan, niedermolekulare Ether wie beispielsweise Diethylether oder niedermolekulare halogenierte Kohlenwasserstoffe wie beispielsweise Perfluorhexan oder tert.-Butylchlorid.

Zum Einstellen der Oberflächenenergie ist es besonders bevorzugt, die in Schritt

a) bereitgestellte Oberfläche vor Durchführen von Schritt b) zu aktivieren, z.B. mit einem Plasma. Auf diese Weise lässt sich die Oberflächenenergie einer in Schritt

a) bereitgestellten Oberfläche besonders einfach und materialschonend auf einen gewünschten Wert anheben. Der Wasserrandwinkel der bereitgestellten oder aktivierten Oberfläche ist vorzugsweise nicht größer als 30°, besonders bevorzugt nicht größer als 10°.

Die in Schritt a) bereitgestellte Oberfläche kann auf beliebige Weise mit der vernetzbaren Precursorschicht im Schritt b) versehen werden. Insbesondere kann der Precursor durch Tauchen, Sprühen, Streichen, Rakeln, Verreiben, Aufdampfen und Spincoaten aufgetragen werden.

Nach dem Verdampfen des Lösungs - oder Verdünnungsmittels beträgt die mittlere Dicke der in Schritt b) aufgetragenen Schicht insbesondere einer vernetzbaren Precursorschicht 10 bis 300 nm, bevorzugt 10 bis 100 nm und besonders bevorzugt 10 bis 50 nm. Bei dieser mittleren Schichtdicke ist besonders gut eine unauffällige Beschichtung herstellbar, die keine für das unbewaffnete Auge als störend erkennbare oder nur eine leichte interferenzbedingte Verfärbung aufweist.

In Schritt b) wird zum Herstellen der aushärtbaren Schicht vorzugsweise eine verdünnte Lösung eines oder mehrerer Precursoren aufgetragen, wobei der Gehalt an Lösungs- und/oder Verdünnungsmittel mindestens 50 Gewichtsprozent und besonders bevorzugt mindestens 70 Gew.-% beträgt.

Die nach dem Verdampfen des Lösungs- oder Verdünnungsmittels verbleibende Precursorschicht braucht die zu behandelnde Oberfläche nicht vollständig zu bedecken; es ist bereits ausreichend, wenn die in Schritt a) bereitgestellte Oberfläche in vorzugsweise statistisch verteilten Bereichen, jeweils mit lateralen Ausdehnungen von vorzugsweise zumindest 1 $\mu$m und vorzugsweise nicht mehr als 100 $\mu$m dünnflächig bedeckt ist. Auf diese Weise werden auf der behandelten Oberfläche fein verteilt Oberflächenbereiche mit Interferenzfarbenspielen erzeugt, deren Aussehen nach dem Vernetzen des Precursors in Schritt c) insbesondere üblichen Fingerabdruck-Fettbedeckungen gleicht und somit den durch das unbewaffnete Auge sichtbaren Kontrast zu tatsächlichen Verschmutzungen nachhaltig verringert, so dass die Schmutzwahrnehmung unterdrückt oder ganz aufgehoben wird. "Laterale Ausdehnung von vorzugsweise zumindest 1 $\mu$m und vorzugsweise nicht mehr als 100 $\mu$m" bedeute dabei, dass die größe Entfernung zwischen zwei Punkten auf dem Rand eines interferierenden Bereichs (insbesondere einer "Insel" bzw. eines "Sees" im Sinne der eingangs beschriebenen vier Arten der Bildung interferierender Bereiche) vorzugsweise zumindest 1 $\mu$m und vorzugsweise nicht mehr als 100 $\mu$m beträgt. Vorzugsweise besitzen nicht mehr als 40% und besonders bevorzugt nicht mehr als 20% der eine Interferenzfarbe aufweisenden Abschnitte laterale Ausdehnungen von mehr als 100 $\mu$m.

Zudem ist es besonders bevorzugt, wenn die beschichteten Bereiche sich in den tiefer gelegenen Bereichen, insbesondere Ausnehmungen oder Senken, der Oberflächentopografie befinden. Hierdurch werden sie durch die Oberflächenstruktur zusätzlich gegen einen mechanischen Abtrag, beispielsweise durch Abrasion, geschützt, so dass der die Schmutzwahrnehmung reduzierende Effekt länger erhalten bleibt.

In Schritt c) wird die Precursorschicht zu einer vorzugsweise polymeren Beschichtung ausgehärtet bzw. vernetzt. Zum Vernetzen verwendet der Fachmann zweckmäßigerweise ein dem jeweils ausgewählten Precursor entsprechendes Vernetzungsverfahren. Bevorzugt wird der Precursor im Plasma durch UV-Strahlung oder durch energiereiche Elektronen vernetzt. Bei der Vernetzung wird ein Vernetzungsgrad eingestellt, der zumindest ausreichend groß ist, um die polymere Beschichtung dauerhaft an der in Schritt a) bereitgestellten Oberfläche zu fixieren.

Nach dem Vernetzen der Precursorschicht, d.h. nach Durchführen von Schritt c) beträgt die mittlere Schichtdicke ebenso 10 bis 300 nm, bevorzugt 10 bis 100 nm, besonders bevorzugt 10 bis 50 nm.

Durch den Vernetzungsprozess kann durch Abtrag, geringfügiges Verdampfen oder Vernetzung kann ein Schrumpfen der polymeren Beschichtung im Vergleich zur in Schritt b) aufgetragenen Precursorschicht auftreten.

Die Abschnitte mit einem Interferenz-Farbenmuster unterscheiden sich vorzugsweise durch ihre Dicke von ihrer Umgebung. Insbesondere in dem Fall, dass die gesamte Oberfläche mit einer durchgehenden Beschichtung versehen ist, innerhalb der es Abschnitte mit einer oder mehreren Interferenzfarben im sichtbaren Spektralbereich gibt (eingangs beschriebene Fälle 2 und 4), ist es bevorzugt, wenn diese sich in ihrer Dicke von der Schichtdicke der interferenzfarbenfreien Abschnitte (d.h. Abschnitte mit Farben außerhalb des sichtbaren Spektralbereichs) der Beschichtung unterscheiden. Vorzugsweise sind die Abschnitte mit Interferenzfarbe gegenüber der interferenzfarbenfreien Beschichtung um 50 bis 500 nm, bevorzugt 150 bis 250 nm, dicker.

In Schritt c) wird besonders bevorzugt mit Hilfe eines Plasmaverfahrens eine Vernetzung des Precursors zur polymeren Beschichtung erzielt. Dazu wird zweckmäßigerweise der flüssige, vorzugsweise lösungs- und/oder verdünnungsmittelabgereicherte Precursor einem Plasma zum Vernetzen des Precursors ausgesetzt.

Alternativ oder zusätzlich dazu ist es bevorzugt, auf die in Schritt c) hergestellte ausgehärtete, bevorzugt vernetzte Beschichtung eine (ggf. weitere), vorzugsweise plasmapolymere Beschichtung in einem Schritt d) aufzutragen. Plasmapolymere Beschichtungen, also insbesondere Beschichtungen, bei denen aus einem Plasma die vernetzenden Einheiten abgeschieden werden, können besonders beschädigungsresistent, haltbar und dünn hergestellt werden, so dass der optische Eindruck der beschichteten Oberfläche nicht beeinträchtigt wird. Wird in Schritt d) eine weitere Beschichtung auf die in Schritt c) hergestellte Beschichtung aufgetragen, so weist die in Schritt d) hergestellte Beschichtung vorzugsweise eine Dicke von nicht mehr als 100 nm, bevorzugt nicht mehr als 50 nm auf, um die schmutzverbergende "Antifingerprint"-Wirkung der in Schritt c) hergestellten Beschichtung nicht aufzuheben.

Die Gesamtschichtdicke ist bevorzugt so eingestellt, dass keine optische Veränderung sichtbar wird. Außerdem wird der Vernetzungsgrad bevorzugt so eingestellt, dass eine hohe mechanische und chemische Resistenz erreicht wird. Die Beschichtung darf auch durch handelsübliche Reiniger oder Lösungsmittel wie Alkohol, die ein Reinigungstuch benetzen, nicht entfernbar sein.

Besonders bevorzugt und zweckmäßig ist es, wenn die in Schritt d) erzeugte plasmapolymere Beschichtung im Wesentlichen transparent und besonders bevorzugt farblos ist. Derartige Schichten sind besonders unauffällig und bewirken allenfalls eine vernachlässigbare Änderung des optischen Oberflächeneindrucks.

Die in Schritt d) hergestellte plasmapolymere Beschichtung ist vorzugsweise eine plasmapolymere Beschichtung zur Funktionalisierung der Schichtoberfläche, z.B. mit Easy-to-clean-Eigenschaften (DE 101 31 156) oder Korrosionsschutzeigenschaften (DE 197 48 240 C2), welche einen zusätzlichen Schutz der in Schritt a) bereitgestellten Oberfläche sowie der in Schritt c) hergestellten Polymerschicht darstellt.

Die in den Schritten c) und/oder d) hergestellten Beschichtungen weisen vorzugsweise einen Wasserrandwinkel von zumindest 90° auf. Derartige Beschichtungen sind besonders schmutzabweisend und lassen sich daher leicht reinigen.

Bevorzugte Substratmaterialien für die erfindungsgemäße Beschichtung sind Metalle, besonders bevorzugt eloxiertes Aluminium, sowie metallisierte Kunststoffe.

Mit dem erfindungsgemäßen Verfahren können insbesondere folgende erfindungsgemäße Körper mit einer die Schmutzwahrnehmung unterdrückenden glänzenden Oberfläche hergestellt werden:

Büroartikel wie Schreibutensilien, Brieföffner, Klammern, Scheren, Lineale, Haushaltsgegenstände, Blenden, Griffe einschließlich Türgriffe und -beschläge, Abflussstopfen, Gerätegehäuse (beispielsweise von Dunstabzugshauben, Kühlschränken, Backöfen, Spülmaschinen, HiFi-Geräte), Herde, Bad- und Küchenarmaturen einschließlich Betätigungselementen und Drückern, Wasserhähne, Mischerbatterie-Gehäuse, Abdeckungen und Blenden im Architekturbereich, Zierleisten für den Haushalts-, beziehungsweise Wohnbereich, für den Automobilbau sowie für den Gebäudebau, insbesondere Zierleisten aus eloxiertem Aluminium, Spiegel und Rückspiegel, Schmuck- und Dekorationsartikel, Möbelbeschläge, Verglasungen aus Glas oder Kunststoff, Fensterrahmen, Bildschirme, Touchscreens, Monitor- und Fernsehröhren, Brillengläser und Kameraobjektive, Handyschalen.

Ergänzend wird zudem ein Verfahren zum Bewerten der Auffälligkeit einer Verschmutzung, insbesondere eines Fingerabdrucks, auf einer Oberfläche bereitgestellt. Das Verfahren ermöglicht, den Erfolg einer erfindungsgemäßen Beschichtung zu messen, und ermöglicht zudem ein Vermessen, welche Oberflächen für das aufbringen einer erfindungsgemäßen Beschichtung besonders geeignet sind. Das Verfahren umfasst die Schritte:

a) Bereitstellen einer zu bewertenden, mit einer Verschmutzung versehenen Oberfläche,

b) Messen einer Streulichtintensität einer von der verschmutzten Oberfläche diffus gestreuten Strahlung, und

c) Vergleichen der in Schritt b) gemessenen Streulichtintensität mit einer Vergleichs-Streulichtintensität einer Vergleichsoberfläche zum Bestimmen eines Maßes für die Auffälligkeit der Verschmutzung.

Das Verfahren geht dabei von der Kenntnis aus, dass eine Verschmutzung vom menschlichen Auge nur dann wahrgenommen wird, wenn die Verschmutzung die Streucharakteristik einer Oberfläche durch Streuung, Absorption, Farbeffekte, Schattierungen und dergleichen wesentlich ändert.

Überraschenderweise wurde nunmehr gefunden, dass der Eindruck einer Verschmutzung, insbesondere wie sie durch Fingerabdrücke hervorgerufen wird, auf einer mit diffusen Licht bestrahlten Oberfläche (dies ist in der Regel gegeben, wenn ein beliebiger Gegenstand ohne zusätzliche direkte Beleuchtung betrachtet wird) über die Messung des von dieser Oberfläche bei Beleuchtung unter einem ausgewählten Winkel mit einer gerichteten Lichtquelle diffus gestreuten Strahlungsanteils beurteilt werden kann (Dies entspricht im Wesentlichen einer Umkehrung des Strahlengangs unter Blickrichtung des gewählten Winkels).

Dazu wird eine Vergleichsoberfläche, die sich zweckmäßigerweise von der zu beurteilenden Oberfläche lediglich durch das Fehlen der zu beurteilenden Verschmutzung unterscheidet, mit Licht einer einzigen Wellenlänge des sichtbaren Spektralbereichs, d.h. von 380 bis 780nm, unter einem bestimmten Winkel bestrahlt und die Intensität der reflektierten Streustrahlung $S_0$ gemessen, vorzugsweise mit Hilfe eines Spektrometers und einer Ulbricht-Kugel. Auf gleiche Weise wird die Intensität der von der zu beurteilenden Oberfläche diffus gestreuten Strahlung $S_{FA}$ gemessen.

Aus beiden Werten wird die Streulichtänderung $S_\Delta$ berechnet als die auf $S_0$ normierte Differenz zwischen $S_0$ und $S_{FA}$:

$$S_\Delta = (S_0 - S_{FA}) / S_0$$

Die Streulichtänderung $S_\Delta$ ist ein Maß für die Auffälligkeit der untersuchten Verschmutzung unter dem gewählten Blickwinkel. Je größer der Wert der Streulichtänderung $S_\Delta$, desto größer sind die Änderungen durch die Verschmutzung auf die optischen Eigenschaften der Oberfläche in Bezug auf Reflexion, Streuung, Absorption, Filterung und dergleichen bei dieser Wellenlänge und desto deutlicher ist die Wahrnehmung der untersuchten Verschmutzung. Bei kleinen Werten für $S_\Delta$ dagegen sind die von der Verschmutzung hervorgerufenen optischen Änderungen im Vergleich zur Vergleichsoberfläche so gering, dass die Verschmutzung für das unbewaffnete menschliche Auge nicht oder nur sehr wenig auffällig ist.

Vorzugsweise wird in Schritt b) die Streulichtintensität jeweils bei einer ersten, zweiten und optional weiteren Wellenlänge bis zu einer Anzahl n, vorzugsweise im Bereich von 380 nm bis 780 nm gemessen, und in Schritt c) die gemessenen Streulichtintensitäten jeweils von den bei den entsprechenden Wellenlängen gemessenen Vergleichs-Streulichtintensitäten abgezogen und die Differenz auf die jeweilige Vergleichs-Streulichtintensität normiert. Auf diese Weise erhält man die spektrale Streucharakteristik, die für jede betrachtete Wellenlänge die Information über die Streulichtänderung enthält:

$$S_{CH} = (S_{\Delta,1}, S_{\Delta,2}, S_{\Delta,3}, \dots , S_{\Delta,i}, \dots S_{\Delta,n})$$

Zusätzlich wird das arithmetische Mittel der so bestimmten Streulichtänderungen berechnet.

Bevorzugt wird das Bewertungsverfahren so ausgeführt, dass die spektrale Streucharakteristik mit zumindest zwei und besonders bevorzugt mit bis zu sieben verschiedenen Wellenlängen bestimmt wird, wobei dann das arithmetische Mittel der bestimmten Streulichtänderungen berechnet wird und ein Maß für die Auffälligkeit der zu beurteilenden Verschmutzung darstellt. Vorzugsweise werden die Streulichtänderungen $S_{\Delta,i}$ jeweils bei zumindest zwei, vorzugsweise drei und besonders bevorzugt bei allen Wellenlängen i der folgenden Gruppe bestimmt: 450 nm, 500 nm, 550 nm, 600 nm, 650 nm, 700 nm und 750 nm. Mit diesen Wellenlängen kann der Bereich des sichtbaren Lichtes gut abgedeckt und repräsentative Werte für den Einfluss üblicher Verschmutzungen und insbesondere von Fettschmutz, wie er bei Fingerabdrücken auftritt, ermittelt werden.

Das Verfahren erlaubt es zudem, Faktoren wie eine Umgebungsbeleuchtung oder das spektrale Helligkeitsempfinden des menschlichen Auges zur Gewichtung der Streulichtänderung bzw. der spektralen Streucharakteristik einzubeziehen. Dazu ist es bevorzugt, die bestimmten Streulichtänderungen jeweils mit einem der jeweiligen Wellenlänge zugeordneten Korrekturfaktor zu gewichten. Für jede Wellenlänge i wird dann die gewichtete Streulichtänderung $S_{\Delta',i}$ bestimmt:

$$S_{\Delta',i} = S_{\Delta,i} \times V_i,$$

wobei i für die jeweilige Wellenlänge steht und $V_i$ ein der jeweiligen Wellenlänge i zugeordneter Korrekturfaktor ist.

Auf diese Weise erhält man die gewichtete spektrale Streucharakteristik, die für jede der n betrachteten Wellenlängen die Information über die gewichtete Streulichtänderung enthält:

$$S_{CH'} = (S_{\Delta',1}, S_{\Delta',2}, S_{\Delta',3}, \dots , S_{\Delta',i}, \dots S_{\Delta',n})$$

Anschließend kann wie zuvor beschrieben das arithmetische Mittel der (nunmehr gewichteten) Streulichtänderungen bestimmt werden:

$$B_A = \frac{1}{n} \sum_{i=1}^{n} S_{\Delta',i}$$

Besonders bevorzugt ist es, wenn in die Mittelwertbildung nur solche spektralen Streucharakteristiken $S_{\Delta',i}$ eingehen, bei denen der Korrekturfaktor $V_i$ größer oder gleich 0,5 beträgt.

Die Korrekturfaktoren $V_i$ können insbesondere gemäß dem Verlauf der spektralen Sensitivität des menschlichen Auges verlaufen. Sie können zusätzlich oder alternativ dazu jedoch auch den Verlauf der Lichtintensität einer Lichtquelle wiederspiegeln, beispielsweise einer Leuchtstoffröhre, oder Tageslicht bei wolkenfreiem oder bedecktem Himmel. Ebenso kann mit Hilfe der Bewertungsfaktoren die Farbe der zu beurteilenden Oberfläche besonders hervorgehoben werden. Die Korrekturfaktoren $V_i$ sind zweckmäßigerweise Werte zwischen 0 und 1, so dass für Wellenlängen mit dem Korrekturfaktor 1 die zugehörigen Werte der nicht gewichteten und der gewichteten Streulichtänderungen identisch sind.

Anhand des Betrages des arithmetischen Mittelwertes $B_A$ (berechnet anhand der Streulichtänderungen $S_{\Delta,i}$ oder der gewichteten Streulichtänderungen $S_{\Delta',i}$) kann eine Bewertung insbesondere nach einem sechsstufigen System erfolgen, wobei der Wert 1 für eine unauffällige Verschmutzung und der Wert 6 für eine sehr auffällige Verschmutzung steht:

$$B_w = 1 \text{ für} \qquad |B_A| \leq 0,01$$

$$B_w = 2 \text{ für } 0,01 < \quad |B_A| \leq 0,02$$

$$B_w = 3 \text{ für } 0,02 < \quad |B_A| \leq 0,03$$

$$B_w = 4 \text{ für } 0,03 < \quad |B_A| \leq 0,04$$

$$B_w = 5 \text{ für } 0,04 < \quad |B_A| \leq 0,05$$

$$B_w = 6 \text{ für} \qquad |B_A| > 0,05$$

Bevorzugt wird das Bewertungsverfahren so ausgeführt, dass die Bewertung der Schmutzauffälligkeit nicht nur unter einem festen Winkel bzw. Blickwinkel sondern bevorzugt bei mehreren Winkeln im Bereich von 0 bis 90° ausgemessen wird. Das arithmetische Mittel der Bewertungen aller ausgewählten Winkel/Blickwinkel kann wiederum als Gesamtbewertung der bestimmten Streulichtänderungen betrachtet werden.

Die Erfindung wird nachfolgend anhand der Figuren und Beispiele näher beschrieben, wobei die Erfindung nicht auf das in den Beispielen Beschriebene beschränkt ist. Es stellen dar:

Figur 1:     eine vergrößerte Aufnahme einer unbehandelten Oberfläche,

Figur 1b:    Oberfläche nach Fig.1 mit Kennzeichnung der Oberflächenstruktur,

Figur 2:     eine vergrößerte Aufnahme einer unbehandelten Oberfläche mit einem Fingerabdruck,

Figur 2b:    Oberfläche nach Fig. 2 mit schematischer Kennzeichnung der Bereiche mit Fettbedeckung,

Figur 2c:    Ausschnitt der Oberfläche nach Fig. 2 mit schematischer Kennzeichnung der mit einem Mikroskop wahrgenommenen Farbeindrücke,

Figur 3:     eine vergrößerte Aufnahme einer Oberfläche gemäß Figur 1 mit aufgetragener flüssiger Precursor-Schicht,

Figur 3b:    Ausschnitt der Oberfläche nach Fig. 3 mit schematischer Kennzeichnung der mit einem Mikroskop wahrgenommenen Farbeindrücke,

Figur 4: eine vergrößerte Aufnahme einer Oberfläche gemäß Figur 1 mit erfindungsgemäßer Beschichtung,

Figur 4b: Ausschnitt der Oberfläche nach Fig. 4 mit schematischer Kennzeichnung der mit einem Mikroskop wahrgenommenen Farbeindrücke,

Figur 4c: Oberfläche nach Fig. 4 mit schematischer Kennzeichnung der Bereiche mit inselartiger, erfindungsgemäßer Schichtbedeckung,

Figur 5: eine vergrößerte Aufnahme einer Oberfläche gemäß Figur 1 mit erfindungsgemäßer Beschichtung gemäß Fig. 4 und zusätzlicher Plasmapolymerschicht,

Figur 5b: Ausschnitt der Oberfläche nach Fig. 5 mit schematischer Kennzeichnung der mit einem Mikroskop wahrgenommenen Farbeindrücke,

Figur 5c: Oberfläche nach Fig. 5 mit schematischer Kennzeichnung der Bereiche mit inselartiger erfindungsgemäßer Schichtbedeckung und

Figur 6: Schematische Querschnittdarstellung erfindungsgemäßer Beschichtungen.

Beispiel 1: Beschichtete Kunststoffkappen

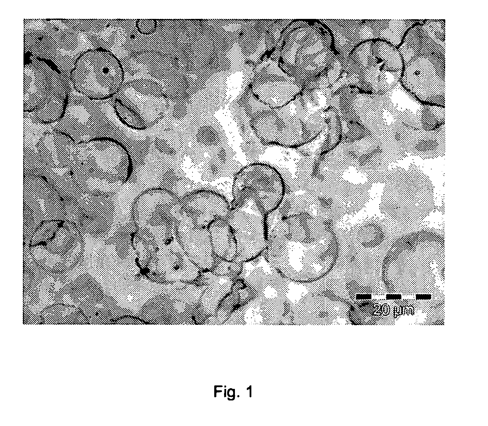

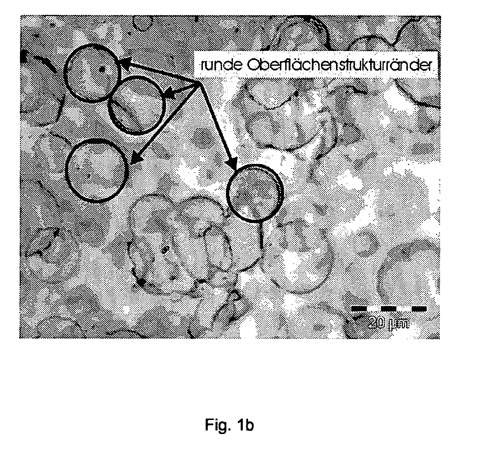

Figur 1 zeigt eine vergrößerte Aufnahme einer als matt grau glänzend wahrgenommenen Kunststoffkappe. Die Kappenoberfläche besitzt runde Strukturen mit einer lateralen Ausdehnung im Bereich von 1 bis 100 $\mu$m (Fig. 1b), die der Größe von Schmutzpartikeln von Fingerabdrücken entsprechen. Die Rauhigkeitswerte $R_a$ bzw. $R_z$ der Oberfläche betragen 0,6 bis 1,0 $\mu$m bzw. 5,0 bis 10 $\mu$m. Der Anteil diffus gestreuten Lichts an der Gesamtintensität des von der Oberfläche reflektierten Lichts beträgt im sichtbaren Spektralbereich 30 bis 50%.

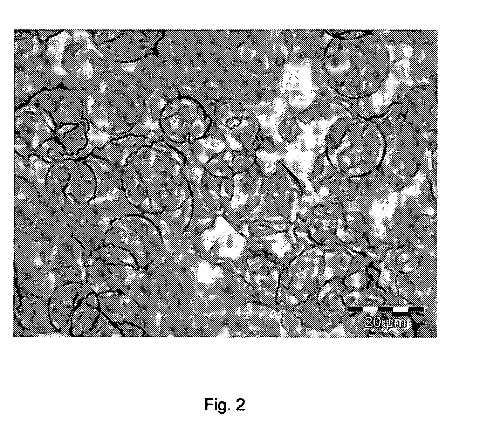

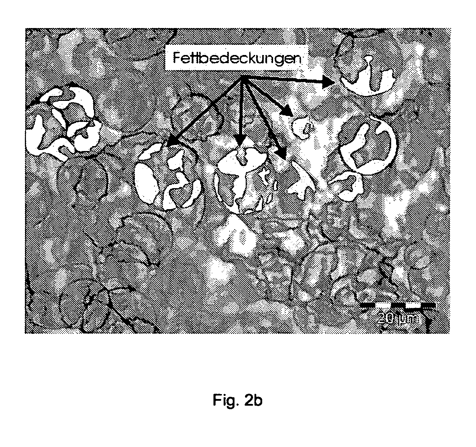

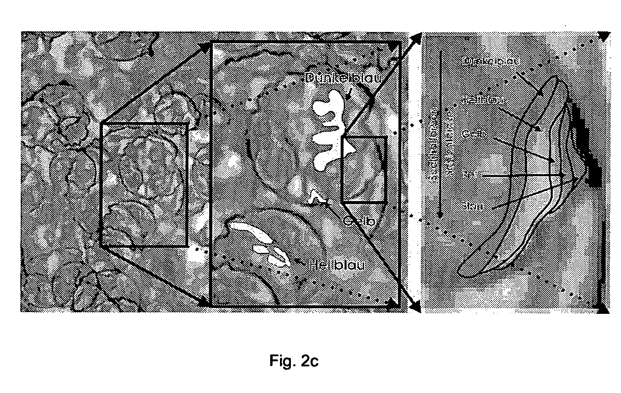

Wird die Oberfläche aus Fig. 1 mit einem Fingerabdruck versehen, so bleiben Schmutzpartikel auf der Oberfläche haften. Die Schmutzpartikel, insbesondere Fettbedeckungen, bewirken durch Interferenzeffekte ein Farbenspiel mit dominierend blauen und grünen Anteilen sowie wenigen roten Anteilen, wie in Fig. 2 dargestellt, und somit einen auffälligen Kontrast zur übrigen Oberfläche. Der Farbeindruck lässt sich nicht mit dem unbewaffneten Auge auflösen, so dass sich der Kontrast der Papillarlinien durch eine dunkle Schattierung einstellt. In Fig. 2 ist das Farbenspiel in Graustufen dargestellt. Im Gegensatz zur sauberen Oberfläche sind hier neben den runden, dunklen Strukturrändern auch innerhalb der Rundstrukturen unterschiedliche Grauschattierungen entsprechend der unterschiedlichen Farbschattierung zu erkennen. Fig. 2b zeigt denselben Oberflächenbereich mit schematischer Kennzeichnung der mit Fingerfett bedeckten Bereiche. Fig. 2c zeigt einen vergrößerten Ausschnitt der Oberfläche mit Kennzeichnung des unter einem Lichtmikroskop wahrgenommenen Farbeindrucks. Größere Schmutzpartikel bis zu 100 $\mu$m Durchmesser werden auf-grund der Oberflächenstrukturgröße kaum wahrgenommen.

Zum Herstellen einer erfindungsgemäßen Beschichtung wird die Kunststoffkappe gemäß Fig. 1 mit Silikonöl AK50 (Wacker Chemie) als Precursor und AK0.65 (HMDSO) als Lösungsmittel benetzt. Die durch Kontaktwinkelmessung bestimmte Oberflächenenergie der Kunststoffkappe liegt nach Aktivierung im Niederdruckplasma bei 50-60 mN/m. Das Lösungsmittel hat eine Oberflächenenergie von 15,9 mN/m, der Precursor eine Oberflächenenergie von 20,8 mN/m (bei 25°).

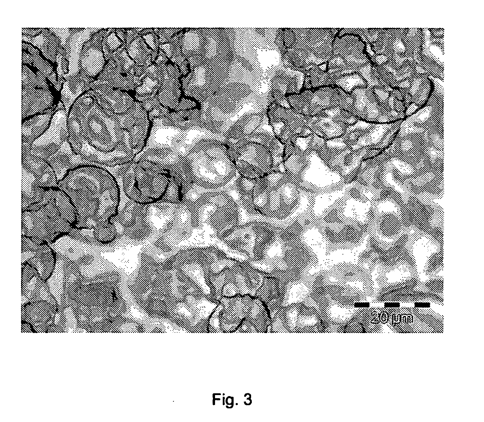

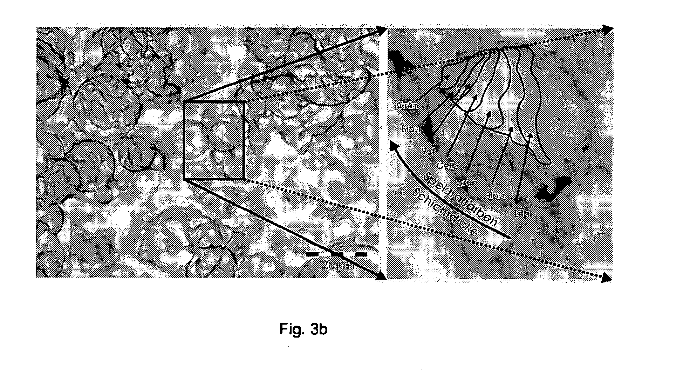

Die Precursor-Lösungsmittelmischung wurde durch Spincoaten aufgetragen. Hierbei verdampft das Lösungsmittel vollständig und es verbleibt eine dünne Precursor-Beschichtung mit einer gemittelten Schichtdicke unterhalb von 100 nm auf der Kappenoberfläche. Die Spreitung der Precursor-Lösungsmittelmischung konnte auf der Oberfläche der Kunststoffkappe visuell beobachtet werden. Die Kunststoffkappe zeigt nach Verdampfen des Lösungsmittels makroskopisch, d.h. für das unbewaffnete Auge, keine oder nur eine leichte interferenzbedingte Blaufärbung. Mikroskopisch wird nach dem Precursorauftrag und Verdampfen des Lösungsmittels das in Figur 3 gezeigte Bild sichtbar. Innerhalb der runden Oberflächenstrukturen sind durch Interferenz an der dünnen Precursor-Bedeckung Regenbogenfarben von Blau bis Rot sichtbar (siehe hierzu die Farbkodierung in Fig. 3b). Im Vergleich zur Oberfläche mit Fingerabdruck sind nach dem Precursorauftrag neben den blauen und grüne Anteilen vermehrt gelbe und rote Farbeindrücke vorhanden, die auf höhere Schichtdicken hindeuten. Aufgrund der Farbanteile lässt sich auf eine höhere mittlere Schichtdicke als auch auf größere Unterschieden in der lokalen Schichtdicke schließen. Die Precursorschicht bildet nach dem Verdampfen des Lösungsmittels keine vollständige Oberflächenbeschichtung, sondern bedeckt lediglich inselförmig einzelne Bereiche der Kunststoffkappe.

Die mit der Precursorschicht versehene Kappe wurde während einer Niederdruckplasmabehandlung so behandelt, dass eine Vernetzung und auch Schrumpfung der Precursor-Schichtdicke erzielt wurde. Die Plasmabehandlung zur Precursorvernetzung, erfindungsgemäß Schritt c), wurde in 2 Teilschritten (I bis II) durchgeführt, deren Parameter im Folgenden tabellarisch aufgelistet sind:

Tabelle 1: Parameter zur Precursorvernetzung in 2 Teilschritten.

|  | Gasart | Teilschritt I | Teilschritt II |
|---|---|---|---|
| Gas 1 [sccm] | $O_2$ | 200 | |
| Gas 2 [sccm] | $H_2$ | 900 | 200 |
| Leistung [W] | | 2000 | 1000 |
| Zeit [s] | | 180 | 60 |

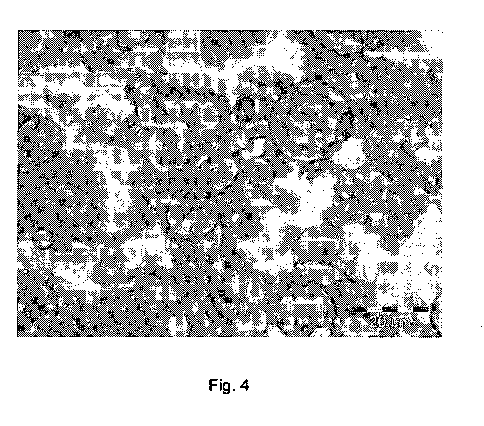

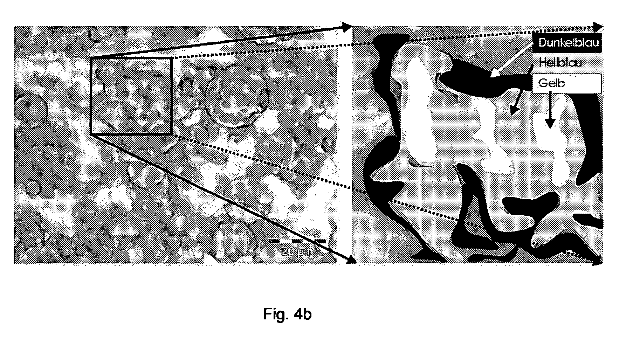

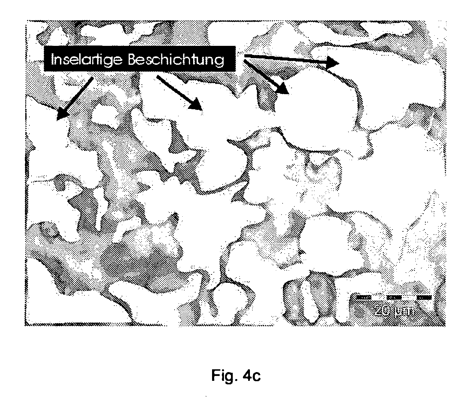

Figur 4 zeigt eine so erhaltene Oberfläche. Zu erkennen sind auch hier innerhalb der runden Oberflächenstrukturen Bereiche mit lateralen Ausdehnungen unterhalb von 10 $\mu$m, die durch Interferenzeffekte an den dünnen, nun fixierten Precursor-Bedeckungen eine gewisse Verfärbung aufweisen. Es ist eine nicht gleichmäßig homogene Beschichtung, sondern eine inselartige Verteilung der eingefärbten Bereiche geschaffen worden (siehe schematische Darstellung Fig. 4c). Der dominierende Farbeindruck ist Hell- sowie Dunkelblau (siehe Farbkodierung in Fig. 4b). Im Vergleich zur Oberfläche nach dem Precursorauftrag, Fig. 3, ist die mittlere Schichtdicke geringer und die lokalen Unterschiede der Schichtdicke reduziert worden, so dass nur sehr wenige nichtblaue Farbanteile erkennbar sind. Makroskopisch wird diese Verfärbung kaum wahrgenommen, so dass nur eine für den Fachmann erkennbare geringfügige Verfärbung der Kappe im Vergleich zum Ursprungszustand sichtbar wird. Die inselartige Verteilung und die Farbpalette sind den Effekten, die ein Fingerabdruck auf der unbeschichteten Oberfläche bewirkt, recht ähnlich, so dass zusammen mit der Struktur der Oberfläche zum Verstecken größerer Schmutzpartikel der Kontrast der Papillarlinien zur sauberen, erfindungsgemäß behandelten Oberfläche nur unwesentlich ist. Somit besitzt die beschriebene Oberfläche die beschriebene optische Antifingerprint-Eigenschaft. Die für die beschichtete Oberfläche gemessenen Rauhigkeitswerte für $R_a$ und $R_z$ liegen im Bereich von 0,5 bis 0,7 $\mu$m bzw. im Bereich von 4,0 bis 6,0 $\mu$m. Somit liegen die für dieses Beispiel gemessenen Rauhigkeiten unterhalb der Ausgangswerte.

Gemäß der Option, in einem Schritt d) die Oberfläche zusätzlich mit einer plasmapolymeren Beschichtung zu versehen wurde die Kunststoffkappe zusätzlich mit einer hydrophoben Polymerisationsschicht überzogen. Der Schritt d), umfassend die Plasmabearbeitungsteilschritte III bis V, schließt in diesem Beispiel direkt an die Vernetzung des Precursors im Plasma (Teilschritte I bis II) an ohne den Plasmareaktor zwischenzeitlich zu öffnen. Somit ergeben sich die folgenden Plasmaparameter:

Tabelle 2: Parameter zur Precursorvernetzung mit zusätzlicher Funktionalisierung in 5 Teilschritten.

|  | Gasart | Teilschritt I | Teilschritt II | Teilschritt III | Teilschritt IV | Teilschritt V |
|---|---|---|---|---|---|---|
| Gas 1 [sccm] | $O_2$ | 200 | | | 20 | 20 |
| Gas 2 [sccm] | $H_2$ | 900 | 200 | 200 | 200 | |
| Gas 3 [sccm] | HMDSO | | | 27 | 27 | 67 |
| Leistung [W] | | 2000 | 1000 | 1000 | 1600 | 700 |
| Zeit [s] | | 180 | 60 | 60 | 180 | 120 |

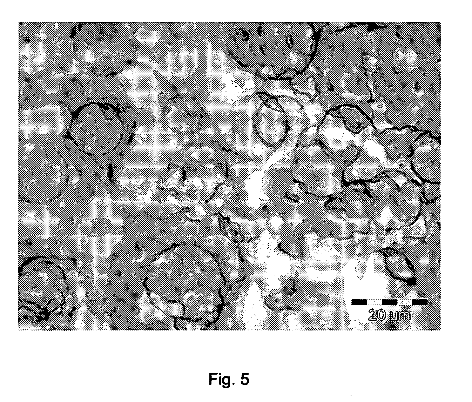

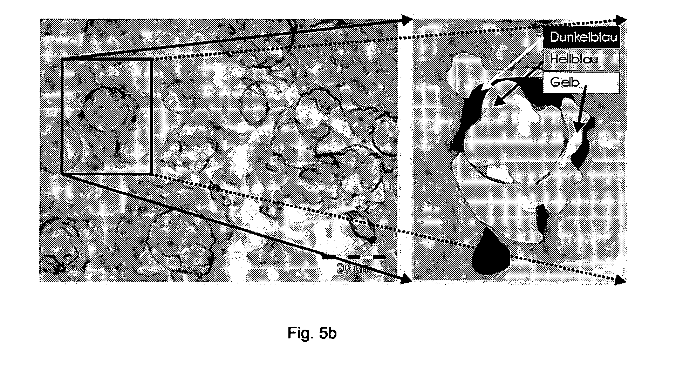

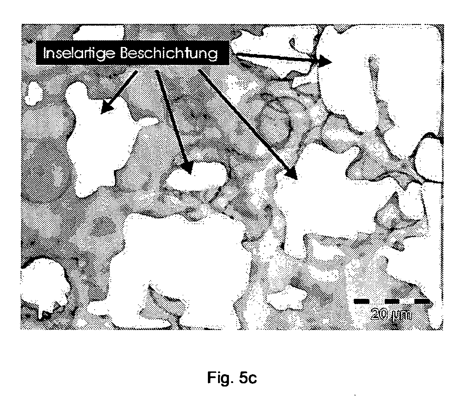

Die Oberfläche nach Precursorvernetzung und Funktionalisierung durch Auftrag einer plasmapolymeren Beschichtung ist in Fig. 5 bzw. 5b und 5c dargestellt und entspricht in ihrer optischen Eigenschaft der Oberfläche der Fig. 4. Zusätzlich zeigt diese Beschichtung durch die angeschlossene Polymerisation hydrophobe Eigenschaften, die eine Anhaftung insbesondere von feuchten Fingerabdrücken weiter reduziert. Ferner werden Easy-to-clean Eigenschaften erzielt. Die für die beschichtete Oberfläche gemessenen Rauhigkeitswerte für $R_a$ und $R_z$ liegen im Bereich von 0,6 bis 0,8 $\mu$m bzw. im Bereich von 4,5 bis 7,5 $\mu$m.

Beispiel 2: Beschichtung einer Metallkappe

Eine Metallkappe mit Oberflächenstrukturen im Bereich von 1 bis 100 $\mu$m wurde ausgewählt. Die gemessenen Rauhigkeitswerte $R_a$ und $R_z$ der Metallkappen-Oberfläche liegen im Bereich von 0,6 bis 0,9 $\mu$m bzw. im Bereich von 5 bis 9 $\mu$m. Der Anteil des diffus gestreuten Lichtes an der Gesamtintensität des von der Oberfläche reflektierten Lichtes beträgt im sichtbaren Spektralbereich 30 bis 50 %. Im Gegensatz zur Kunststoffkappe gemäß Beispiel 1 ist die Oberfläche der Metallkappe gekrümmt.

Die erfindungsgemäße Antifingerprint-Beschichtung wurde entsprechend Beispiel 1, mit zusätzlicher Plasmapolymerschicht (analog zu Tabelle 2) aufgetragen. Die für die beschichtete Oberfläche gemessenen Rauhigkeitswerte $R_a$ und $R_z$ liegen im Bereich von 0,7 bis 0,9 $\mu$m bzw. im Bereich von 5 bis 10 $\mu$m. Auch diese Oberfläche besitzt die optische Antifingerprint Eigenschaft.

Beispiel 3: Beurteilung einer erfindungsgemäßen Oberfläche mit "Antifingerprint"-Eigenschaft:

Die in Beispiel 1 erfindungsgemäß beschichtete Oberfläche mit zusätzlicher Plasmapolymerschicht (Tabelle 2), nachfolgend als $O_{AFP}$ gekennzeichnet, und eine unbeschichtete, ansonsten identische Vergleichsoberfläche, Kennzeichnung $O_0$, wurden mit dem erfindungsgemäßen Verfahren bewertet und verglichen. Die unverschmutzte und die mit einem Fingerabdruck verschmutzte Oberfläche wurde mit einem UV-Vis Spektrometer (Specord 200 mit Spektragon-Integrationskugel, analytic Jena) unter einem Einfallswinkel $\alpha$ = 8° bei den sieben besonders bevorzugten Wellenlängen im Bereich von 450 bis 750 nm vermessen. Um eine möglichst geringe Schwankung der Messsignale zu erzielen, wurde mit niedriger spektraler Auflösung, nämlich einem Breitenspalt von 5 nm unter einer Integrationszeit von 5 Sekunden gemessen. Eine Wiederholungsmessung ergab für das verwendete Messsystem bei einer Wellenlänge von 450 nm einen relativen Fehler von weniger als 0,015 %, bei den übrigen Wellenlängen einen relativen Fehler von weniger als 0,01 %.

Die gemessenen Streustrahlungsintensitäten wurden normiert auf die gesamte von der Oberfläche reflektierte Strahlung. Die gemessenen Werte für $S_0$ entsprechen daher den prozentualen Anteilen der Streustrahlung an der Gesamtreflektivität. Die Bewertungsfaktoren $V_i$ wurden in Anlehnung an die spektrale Empfindlichkeit des menschlichen Auges gewählt und auf das Empfindlichkeitsmaximum bei der Wellenlänge von 550 nm normiert. Als volle Halbwertsbreite, FWHM, der als Gaußglocke angenommenen Verteilung wurden 200 nm gewählt. Für die Gewichtungsfaktoren ergeben sich somit die Werte 0,50 für 450 nm, 0,84 für 500 nm, 1,00 für 550 nm, 0,84 für 600 nm, 0,50 für 650 nm, 0,21 für 700 nm und 0,06 für 750 nm. Die Ergebnisse gemäß dem erfindungsgemäßen Verfahren sind in Tabelle 3 aufgeführt:

Tabelle 3: Bewertung der Antifingerprint-Eigenschaften der Kunststoffkappen

| Oberfläche | Wellenlänge (nm) | $S_{0,i}$ | $S_{FA,i}$ | $S_{\Delta,i}$ | $S_{\Delta',i}$ | Mittelwert $B_A$ $B_w$ | Bewertung | Visuelle beurteilung |
|---|---|---|---|---|---|---|---|---|
| $O_{AFP}$ | 450 | 48,35 | 48,28 | 0,00 | 0,00 | 0,006 | 1 | Fingerabdruck nicht zu nicht zu erkennen |
| | 500 | 47,52 | 47,61 | 0,00 | 0,00 | | | |
| | 550 | 47,27 | 47,65 | -0,01 | -0,01 | | | |
| | 600 | 47,23 | 47,86 | -0,01 | -0,01 | | | |
| | 650 | 47,14 | 47,94 | -0,02 | -0,01 | | | |
| | 700 | 46,92 | 47,77 | -0,02 | -0,00 | | | |
| | 750 | 46,74 | 47,59 | -0,02 | -0,00 | | | |
| $O_0$ | 450 | 38,44 | 36,25 | 0,06 | 0,03 | 0.044 | 5 | Fingerabdruck gut erkennbar |
| | 500 | 37,49 | 35,34 | 0,06 | 0,05 | | | |
| | 550 | 37,07 | 34,96 | 0,06 | 0,06 | | | |
| | 600 | 36,91 | 34,88 | 0,06 | 0,05 | | | |
| | 650 | 36,81 | 34,88 | 0,05 | 0,03 | | | |
| | 700 | 36,73 | 34,89 | 0,05 | 0,01 | | | |
| | 750 | 36,69 | 34,96 | 0,05 | 0,00 | | | |

Tabelle 3 zeigt, dass ein auf der beschichteten Oberfläche O_AFP angeordneter Fingerabdruck im Gegensatz zur unbeschichteten Oberfläche O_0 kaum Veränderungen der spektralen Streucharakteristik verursacht. Diese Beobachtung und die in Tabelle 3 angegebene Bewertung stimmen mit der subjektiv wahrgenommenen Sichtbarkeit des Fingerabdrucks gut überein. Die erfindungsgemäß beschichte Oberfläche lässt einen Fingerabdruck daher objektiv nachprüfbar "verschwinden", sie besitzt daher die "Antifingerprint"-Eigenschaft.

Beispiel 4: Vergleich zwischen einem aluminium-beschichteten Silizium-Wafer und einer gebeizten Aluminium-Oberfläche:

Ein Aluminium-beschichteter Silizium-Wafer ("Al-Si-Wafer") und eine gebeizte Aluminium-Oberfläche ("Al-gebeizt") wurden jeweils mit einem Fingerabdruck versehen und wie in Beispiel 3 beschrieben vermessen. Tabelle 4 zeigt die Ergebnisse der Messung:

Tabelle 4: Bewertung der Antifingerprint-Eigenschaften von einer sehr glatten und einer sehr rauhen Vergleichsoberfläche

| Oberfläche | Wellenlänge (nm) | $S_{0,i}$ | $S_{FA,i}$ | $S_{\Delta,i}$ | $S_{\Delta',i}$ | Mittelwert $B_A$ | Bewertung $B_w$ | Visuelle Beurteilung |
|---|---|---|---|---|---|---|---|---|
| Al-Si-Wafer | 450 | 1,70 | 2,68 | -0,58 | -0,29 | 0,31 | 6 | fingerabdruck gut erkennbar |
| | 500 | 1,59 | 2,34 | -0,47 | -0,40 | | | |
| | 550 | 1,64 | 2,29 | -0,40 | -0,40 | | | |
| | 600 | 1,68 | 2,27 | -0,35 | -0,29 | | | |
| | 650 | 1,75 | 2,29 | -0,31 | -0,16 | | | |
| | 700 | 2,02 | 2,48 | -0,23 | -0,05 | | | |
| | 750 | 2,19 | 2,61 | -0,19 | -0,01 | | | |
| Al- | 450 | 46,58 | 46,02 | 0,01 | 0,01 | 0.006 | 1 | Fingerabdruck |
| | 500 | 45,08 | 44,45 | 0,01 | 0,01 | | | |
| | 550 | 44,18 | 43,58 | 0,01 | 0,01 | | | |
| | 600 | 43,63 | 43,07 | 0,01 | 0,00 | | | |
| | 650 | 43,18 | 42,65 | 0,01 | 0,00 | | | |
| | 700 | 42,74 | 42,25 | 0,01 | 0,00 | | | |
| | 750 | 42,43 | 41,95 | 0,01 | 0,00 | | | |

Auf der gebeizten Aluminium-Oberfläche hebt sich der aufgebrachte Fingerabdruck kaum von der Umgebung ab. Der Aluminium-beschichtete Silizium-Wafer hingegen besitzt wie ein Spiegel eine relativ glatte Oberfläche, auf der ein Fingerabdruck leicht zu erkennen ist. Diese subjektive Beurteilung wird mit dem erfindungsgemäßen objektiven Bewertungsverfahren gut nachvollzogen.

**Patentansprüche**

**1.** Verfahren zum Herstellen einer die Schmutzwahrnehmung unterdrückenden glänzenden Oberflächen, umfassend die Schritte:

a) Bereitstellen einer glänzenden Oberfläche,
b) Versehen der Oberfläche mit einer aushärtbaren Schicht, insbesondere vernetzbaren Precursorschicht, mit einer mittleren Dicke von 10 bis 300 nm nach Verdampfen eines gegebenenfalls eingesetzten Lösungs- oder Verdünnungsmittels,
c) Aushärten, insbesondere Vernetzen, der aushärtbaren Schicht,
wobei die Oberfläche spätestens nach Durchführen von Schritt c) im sichtbaren Licht Abschnitte mit einem Interferenz-Farbenmuster aufweist, und wobei die Abschnitte laterale Ausdehnungen von 1 bis 100 μm auf-

weisen.

2. Verfahren nach Anspruch 1, **dadurch gekennzeichnet, dass** die in Schritt a) bereitgestellte Oberfläche eine mittlere Rauhigkeit $R_a$ von 0,3 bis 1,2 $\mu$m und/oder eine Rauhtiefe $R_z$ von 3,0 bis 15 $\mu$m aufweist,

3. Verfahren nach einem der Ansprüche 1 bis 2 **dadurch gekennzeichnet, dass** die in Schritt c) hergestellte ausgehärtete Schicht eine mittlere Schichtdicke an den Abschnitten mit Interferenz-Farbenmuster von weniger als 300 nm besitzt.

4. Verfahren nach einem der Ansprüche 1 bis 3, **dadurch gekennzeichnet, dass** die Abschnitte mit einem Interferenz-Farbenmuster einen Flächenanteil von 10 bis 60 Prozent der in Schritt b) behandelten Oberfläche bedecken

5. Verfahren nach einem der Ansprüche 1 bis 5, **dadurch gekennzeichnet, dass** in Schritt c) die aushärtbare Schicht zumindest oberflächlich ausgehärtet wird durch (a) Verdunsten eines Lösungs- und/oder Verdünnungsmittels, und/oder (b) mit Hilfe einer thermischen Aushärtung und/oder (c)mit Hilfe eines Plasmaverfahrens.

6. Verfahren nach einem der vorherige Ansprüche, **dadurch gekennzeichnet, dass** auf die in Schritt c) hergestellte ausgehärtete Beschichtung eine plasmapolymere Beschichtung aufgebracht wird.

7. Verfahren nach einem der Ansprüche 1 bis 6, **dadurch gekennzeichnet, dass** die Beschichtung einen Wasserrandwinkel von zumindest 90° oder mehr besitzt.

8. Verfahren nach einem der Ansprüche 1 bis 7, **dadurch gekennzeichnet, dass** in Schritt b) die aushärtbare Schicht als verdünnte Lösung mit einem Gehalt von mindestens 50 Gewichtsprozent eines Lösungs- und/oder Verdünnungsmittel aufgetragen wird.

9. Verfahren nach einem der Ansprüche 1 bis 8, **dadurch gekennzeichnet, dass** die bereitgestellte Oberfläche vor Schritt b), beispielsweise über eine Oberflächenvorbehandlung, so ausgestaltet wird, dass sie einen Wasserrandwinkel von maximal 30° aufweist.

10. Körper mit einer die Schmutzwahrnehmung unterdrückenden glänzenden Oberfläche, umfassend eine Beschichtung mit Abschnitten mit einem durch Schichtdickenunterschied bestimmten Interferenz-Farbenmuster, wobei die Abschnitte laterale Ausdehnungen von 1 bis 100 $\mu$m aufweisen und vorzugsweise eine Dicke von nicht mehr als 300 nm aufweisen.

11. Körper nach Anspruch 10, herstellbar oder hergestellt nach einem der Ansprüche 1 bis 9.

**Claims**

1. A method for producing a glossy surface which suppresses the perception of dirt, comprising the steps:

   a) supplying of a glossy surface,
   b) providing the surface with a curable layer, in particular cross-linkable precursor layer, with an average thickness of 10 to 300 nm after evaporation of an optionally used solvent or diluent,
   c) curing, in particular cross-linking, of the curable layer,
   the surface, at the latest after step c) has been carried out, in visible light having sections with an interference colour pattern, and the sections having lateral extents of from 1 to 100 $\mu$m.

2. A method according to Claim 1, **characterised in that** the surface supplied in step a) has an average roughness $R_a$ of 0.3 to 1.2 $\mu$m and/or a surface roughness $R_z$ of 3.0 to 15 $\mu$m.

3. A method according to one of Claims 1 to 2, **characterised in that** the cured layer produced in step c) has an average layer thickness on the sections with interference colour pattern of less than 300 nm,

4. A method according to one of Claims 1 to 3, **characterised in that** the sections with an interference colour pattern cover a surface proportion of 10 to 60 percent of the surface treated in step b).

**5.** A method according to one of Claims 1 to 5, **characterised in that** in step c) the curable layer is at least superficially cured by (a) evaporation of a solvent and/or diluent, and/or (b) with the aid of thermal curing and/or (c) with the aid of a plasma process.

**6.** A method according to one of the preceding claims, **characterised in that** a plasma polymer coating is applied to the cured coating produced in step c).

**7.** A method according to one of Claims 1 to 6, **characterised in that** the coating has a water contact angle of at least 90° or more.

**8.** A method according to one of Claims 1 to 7, **characterised in that** in step b) the curable layer is applied as a dilute solution with a content of at least 50 percent by weight of a solvent and/or diluent.

**9.** A method according to one of Claims 1 to 8, **characterised in that** the surface supplied, before step b), for example by means of a surface pre-treatment, is configured such that it has a water contact angle of at most 30°.

**10.** A body with a glossy surface which suppresses the perception of dirt, comprising a coating with sections with an interference colour pattern determined by difference in layer thickness, the sections having lateral extents of from 1 to 100 $\mu$m and preferably a thickness of no more than 300 nm.

**11.** A body according to Claim 10, producible or produced according to one of Claims 1 to 9.


**Revendications**

**1.** Procédé pour réaliser une surface lustrée dissimulant les salissures, comprenant des étapes consistant à :

a) préparer une surface lustrée,
b) couvrir la surface d'une couche durcissable, en particulier une couche précurseur réticulable, avec une épaisseur moyenne de 10 à 300 nm après évaporation d'un solvant ou diluant utilisé le cas échéant,
c) durcir, en particulier réticuler, la couche durcissable,
la surface présentant dans la lumière visible, au plus tard après exécution de l'étape c), des parties avec un échantillon d'anneau de Newton, et les parties présentant des extensions latérales de 1 à 100 $\mu$m.

**2.** Procédé selon la revendication 1, **caractérisé en ce que** la surface préparée lors de l'étape a) présente une rugosité moyenne $R_a$ de 0,3 à 1,2 $\mu$m et/ou une profondeur de rugosité $R_z$ de 3,0 à 15 $\mu$m.

**3.** Procédé selon l'une des revendications 1 à 2, **caractérisé en ce que** la couche durcie réalisée lors de l'étape c) possède une épaisseur moyenne inférieure à 300 nm sur les parties avec échantillon d'anneau de Newton.

**4.** Procédé selon l'une des revendications 1 à 3, **caractérisé en ce que** les parties avec un échantillon d'anneau de Newton couvrent une part superficielle de 10 à 60 pourcent de la surface traitée lors de l'étape b).

**5.** Procédé selon l'une des revendications 1 à 5, **caractérisé en ce que** la couche durcissable est durcie au moins en surface, par (a) volatilisation d'un solvant et/ou d'un diluant et/ou (b) à l'aide d'un durcissement thermique et/ou (c) à l'aide d'un procédé plasma, lors de l'étape c).

**6.** Procédé selon l'une des revendications précédentes, **caractérisé en ce qu'**un revêtement polymère plasma est appliqué sur le revêtement durci réalisé lors de l'étape c).

**7.** Procédé selon l'une des revendications 1 à 6, **caractérisé en ce que** le revêtement possède un angle de mouillage d'eau d'au moins 90° ou plus.

**8.** Procédé selon l'une des revendications 1 à 7, **caractérisé en ce que** la couche durcissable est appliquée en tant que solution diluée avec une teneur d'au moins 50 pourcent de poids d'un solvant et/ou diluant lors de l'étape b).

**9.** Procédé selon l'une des revendications 1 à 8, **caractérisé en ce que** la surface préparée est configurée de telle sorte qu'elle présente, avant l'étape b), par exemple via un traitement surfacique préalable, un angle de mouillage d'eau de 30° au maximum.

10. Corps avec une surface lustrée dissimulant les salissures, comprenant un revêtement avec des parties ayant un échantillon d'anneau de Newton déterminé par différence d'épaisseur de couche, les parties présentant des extensions latérales de 1 à 100 $\mu$m et présentant de préférence une épaisseur inférieure ou égale à 300 nm.

11. Corps selon la revendication 10, réalisable et réalisé selon l'une des revendications 1 à 9.

Fig. 1

Fig. 1b

Fig. 2

Fig. 2b

Fig. 2c

Fig. 3

Fig. 3b

Fig. 4

Fig. 4b

**Fig. 4c**

Fig. 5

Fig. 5b

**Fig. 5c**

1)

Inselartige-
Bedeckung

Substrat

2)

Bedeckung

Inselartige-
Bedeckung

Substrat

3)

Seenartige-
Bedeckung

Substrat

4)

Bedeckung

Seenartige-
Bedeckung

Substrat

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10158838 A1
- DE 10057464 A1
- DE 10144531 A1
- DE 10159288 A1
- US 5599489 A
- JP 07328532 B
- EP 1078975 A1
- JP 3572916 A
- EP 0913447 A1
- DE 10131156
- DE 19748240 C2